(19) Europäisches Patentamt
European Patent Office
Office européen des brevets

(11) **EP 0 788 216 A2**

(12) **EUROPEAN PATENT APPLICATION**

(43) Date of publication:
**06.08.1997 Bulletin 1997/32**

(51) Int Cl.⁶: **H02M 1/12**

(21) Application number: **96306451.4**

(22) Date of filing: **05.09.1996**

(84) Designated Contracting States:
**CH DE DK GB IT LI**

(30) Priority: **08.09.1995 US 525400**
**29.08.1996 US 705116**

(71) Applicant: **FRANKLIN ELECTRIC Co., Inc.**
**Bluffton Indiana 46714 (US)**

(72) Inventor: **Wagoner, Robert G.**
**Bluffton, Indiana (US)**

(74) Representative: **Newstead, Michael John et al**
**Page Hargrave**
**Temple Gate House**
**Temple Gate**
**Bristol BS1 6PL (GB)**

(54) **Filter for motor drive circuit**

(57) This disclosure relates to a filter for use in a drive circuit for powering an electrical device such as a motor, the drive circuit including wiring connecting a drive to the device. The filter comprises at least one common mode choke including a single core and coils for connection in the wiring between the drive and the device, and capacitors connected to the wiring to reduce high frequency noise on said wiring. The common mode choke forms a low pass filter which further reduces the high frequency noise on the wiring. Where two common mode chokes are provided, one common mode choke is connected on each side of the capacitors.

FIG.1

## Description

<u>Field and Background of the Invention</u>

This invention relates to apparatus for reducing the electromagnetic interference (EMI) radiated by a drive for an electric motor.

An electric motor drive that has increasingly come into use, includes a rectifier for converting single-phase AC power to DC, and a controllable inverter for converting the DC to variable frequency polyphase voltage. An electric motor connected to receive the polyphase voltage (normally three-phase voltage) may be operated at a variable speed which is related to the variable frequency output of the inverter. The inverter usually includes controlled solid state switches which produce the polyphase voltage on a power cable connecting the drive with the motor.

While apparatus as described above works well, the switches produce a voltage with a high dv/dt component, and consequently the drive output on the power cable radiates high frequency energy (or noise). The power cable connecting the drive output to the motor acts as an antenna which transmits the high frequency energy, and this energy interferes with the reception on nearby radio receivers, particularly on the AM band.

The foregoing problem is well known and has been reduced in the past by, for example, shielding the wiring (the power cable) between the drive and the motor. Shielding may take the form of a metal sheath or pipe around the wiring, but if the wiring is quite long, the shield may be excessively expensive and difficult to install. For example, in a residential water supply including a well at a distance from the residence building, the motor drive will normally be located with the building and be connected by the wiring to the motor in the well. Even if unshielded wiring is buried in the ground to a depth of about four feet, the radiation may be detected by an AM radio. A shield around the wiring from the motor drive to the motor in the well casing may be too expensive, as mentioned above.

Filters have also been provided to reduce the radiation. In the past, such filters have included three separate inductors, one in each line of the three-phase power cable. In the past, filters of this nature have been quite large and are also expensive.

It is a general object of the present invention to obviate the foregoing problem by providing an improved EMI filter particularly useful for a motor drive, which is cost and size effective.

<u>Summary of the Invention</u>

The present invention comprises a filter for use in a drive circuit for powering an electrical device such as a motor, the drive circuit including wiring connecting a drive to the device. The filter comprises at least one common mode choke including a coil for connection in each wire between the drive and the device, and capacitors connected to said wiring for reducing high frequency noise on said wiring. The common mode choke forms a low pass filter for reducing high frequency noise on the wiring.

Where two chokes are provided, one is connected on each side of the capacitors.

<u>Brief Description of the Drawings</u>

The invention will be better understood from the following detailed description taken in conjunction with the accompanying figures of the drawings, wherein:

Fig. 1 is a block diagram of a power supply for a motor, including a motor drive and filter in accordance with the invention;

Fig. 2 is a block diagram of the motor drive and filter of the power supply of Fig. 1;

Figs. 3-6 are schematic diagrams of alternative filter constructions;

Fig. 7 is a diagrammatic perspective view of a choke of the filter;

Fig. 8 is a side view showing the construction of the choke;

Fig. 9 is an end view of the choke shown in Fig. 8; and

Fig. 10 is a schematic diagram of the choke shown in Figs. 8 and 9.

<u>Detailed Description of the Drawings</u>

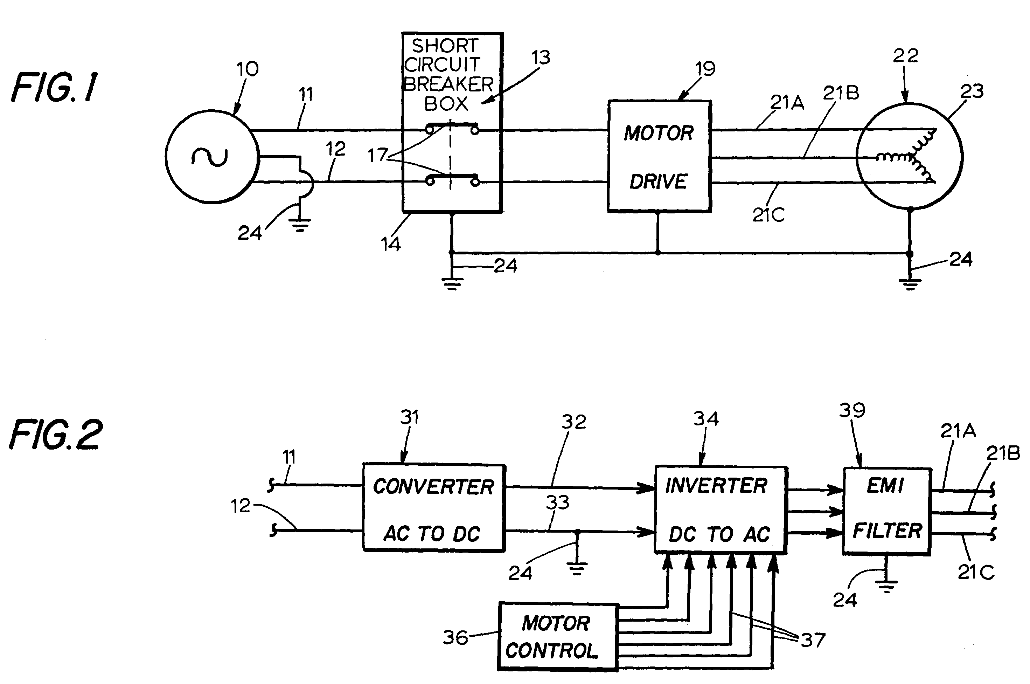

Fig. 1 illustrates a system including a single-phase AC supply 10 (such as 230 VAC outlet) connected by two lines 11 and 12 to a short circuit breaker 13. The supply 10 and the box 14 of the breaker 13 include ground connections 24. The breaker 13 includes contacts 17 connected in the lines 11 and 12 and a conventional short circuit protector. The lines 11 and 12 are further connected to the input of a motor drive 19 which has its output conductors 21A, 21B and 21C connected to the three windings of a three-phase induction motor 22. The housing or casing 23 of the motor is connected to ground as indicated at 24, and the motor drive 19 is also connected to ground 24.

While in the specific example described herein, the motor 22 is coupled to drive a pump (not illustrated) and the pump-motor unit is mounted in a water well, it will be apparent that the invention may be useful in other applications. The casing 23 of the motor is grounded by the well water. The three conductors 21A, 21B and 21C are in a power cable which extends from the drive 19 (usually inside a residential building) out to and down the well casing to the motor 22. The drive 19 powers the pump-motor unit which delivers well water to the residence. Pending U.S. patent application Serial No. 08/318,232 of David M. Triezenberg (EP-A-0 709 575) titled "Motor Control System" describes in more detail such a motor drive, and the disclosure of the above Triezenberg application is incorporated herein by reference.

Fig. 2 shows the motor drive 19 in more detail. It includes a DC link arrangement including a converter 31 which rectifies the AC voltage on the lines 11 and 12 to a DC voltage on two lines 32 and 33, and an inverter 34 which converts the DC to a variable frequency three-phase voltage on lines 21A, 21B and 21C. A motor control unit 36 controls the sequence and timing of the switches in the inverter 34 by generating switching signals on lines 37 and, thereby, the frequency of the three-phase voltage. The speed of the motor 22 (and the output of the pump driven by it) is, of course, related to the frequency. The components 31, 34 and 36 may have conventional constructions well known to those skilled in this art.

As previously mentioned, high frequency noise, including both common mode noise and differential mode noise, is transmitted by the output lines of the inverter in prior art units, and the drive 19 constructed in accordance with this invention includes a filter 39 which substantially reduces the level of the noise.

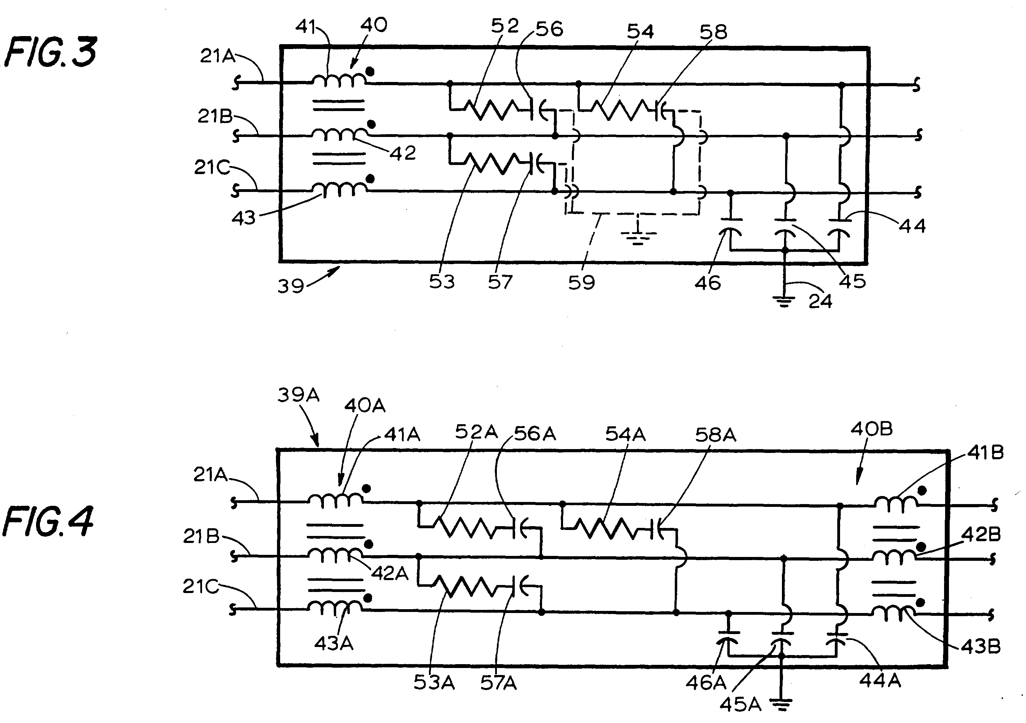

The filter 39 is shown in more detail in Fig. 3. Three series inductances 41, 42 and 43 are connected in the lines 21A, 21B and 21C, respectively, and three capacitors 44, 45 and 46 connect the lines 21A, 21B and 21C, respectively, to ground 24 in a Y-network. The capacitors 44-46 form low impedance paths for both the common mode and differential mode high frequency noise and shunt such noise to ground 24. The inductors 41-43 (to be described further hereinafter) have a high impedance to both the common mode and differential mode high frequency noise. The inductors 41 to 43 combine with the capacitors 44 to 46 to form a low pass filter which blocks the high frequency noise but passes the lower frequency drive voltage.

As mentioned above, the high frequency radiation or noise is shunted to ground. To be an effective or good ground for high frequency noise, the path to ground should have low values of resistance and inductance. In the specific example referred to previously wherein the motor is in a water well, the ground wire 24 is preferably connected to the motor casing which is submersed in the well water. However, other good ground connections will be apparent to those skilled in the art.

Alternatively, the capacitors 44-46 could be tied together to a node as shown in Fig. 3 without, however, the connection to ground 24. As a consequence, the capacitors 44-46 would only reduce the differential mode high frequency noise on the lines 21A, 21B and 21C.

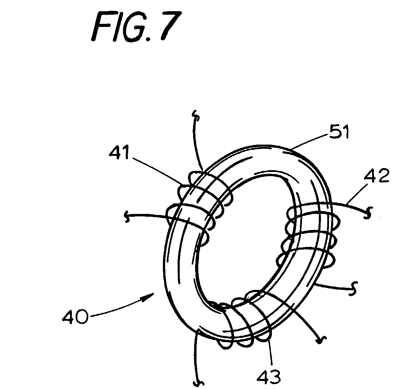

The three inductances 41-43 are wound on a single core and form a common mode choke 40. With reference to Fig. 7, the inductances or coils are wound on a single toroidal core 51 which may, for example, have a square or round shape in cross section. It should be noted, however, that shapes other than toroids could be used in conjunction with the three inductances 41-43, as is well known to those skilled in the art. The core 51 is preferably made of a material, such as laminated iron, having a high permeability. The three inductances (or coils) 41-43 have the same values, the same number of turns, and are wound in the same direction on the core 51, such that the fields generated by the coils oppose each other. As a consequence, the inductances form a common mode choke which is relatively small and inexpensive as compared with a construction wherein the three inductances are separate.

The low pass filter formed by the inductances 41 to 43 and the capacitors 44 to 46 have a natural resonant frequency defined by

$$F = 1/(2\pi \sqrt{LC})  \qquad (1)$$

wherein L is the value of each inductance and C is the value of each capacitor.

To reduce the gain at the resonant frequency, the three lines 21A, 21B and 21C are interconnected in a delta network by resistors 52, 53 and 54 and by capacitors 56, 57 and 58. The components 52 and 56 are connected in series between the lines 21A and 21B; the components 53 and 57 are connected in series between the lines 21B and 21C; and the components 54 and 58 are connected in series between the lines 21A and 21C. Instead of connecting the capacitors 56 to 57 to the lines 21B and 21C as shown by the solid lines in Fig. 3, the three capacitors 56, 57 and 58 may have one side connected to the resistors and the other side connected to ground 24 as shown by the dashed lines 59 in Fig. 3 to form a Y-network.

The capacitors 56, 57 and 58, disposed as shown in Fig. 3, further block the high frequency noise by reducing differential mode noise on the lines 21A, 21B and 21C. If the capacitors 56, 57 and 58 are connected to ground 24 in a Y-network as shown by the dashed lines 59, the capacitors 56, 57 and 58 would also assist the filtering of common mode noise in the same manner as the capacitors 44-46.

While the optimum values chosen for the components may vary depending upon the application, the following is a specific example. Capacitors 44, 45 and 46 have the same values; capacitors 56, 57 and 58 have the same values, and resistors 52, 53 and 54 have the same values. The values of the capacitors 56 to 58 are much larger than the values of capacitors 44 to 46. The value R of each of the resistors 52-54 may be selected as follows. First, two resonant frequencies are found from

$$F_1 = 1/(2\pi \sqrt{L_{41} \bullet C_{56}}) \qquad (2)$$

and

$$F_2 = 1/(2\pi \sqrt{L_{41} \bullet C_{44}}) \qquad (3)$$

where

 $L_{41}$ is the value of inductance 41
 $C_{56}$ is the value of capacitance 56
 $C_{44}$ is the value of capacitance 44

$$F_3 = \sqrt{F_1 \bullet F_2} \qquad (4)$$

and

$$R = 2\pi F_3 \bullet L_{41} \qquad (5)$$

The following are the values of a specific example of the circuit of Fig. 3:

The three coils 41, 42 and 43 form a common mode choke having an inductance of 6.5 mH ± 20% and a leakage inductance of 160 μH.

| | |
|---|---|
| resistor 52 = | 100 ohms ± 10% |
| resistor 53 = | 100 ohms ± 10% |
| resistor 54 = | 100 ohms ± 10% |
| capacitor 56 = | 4700 pf ± 10% |
| capacitor 57 = | 4700 pf ± 10% |
| capacitor 58 = | 4700 pf ± 10% |
| capacitor 44 = | 1000 pf ± 10% |
| capacitor 45 = | 1000 pf ± 10% |
| capacitor 46 = | 1000 pf ± 10% |

The following is a description of tests involving a system including a filter as shown in Fig. 3 (solid lines) and the component values described above. First, the background level of radio waves was measured with the system turned off. Then the system was operated with a filter as shown in Fig. 3 but with the inductances 41, 42 and 43 formed by three separate coils on separate cores, each coil having a value of 70 μH. The resistors and the capacitors had the values described above. The system was operated without a shield over the wiring and the noise level detected was approximately 45 dB higher than the background level at the greatest difference. With shielding over the wiring and the drive and with a filter as mentioned above which includes three separate coils, the noise detected was about 12 dB above the background level at the greatest difference. Then the three separate coils were removed and replaced by the common mode choke 40 having an inductance of 6.5 mH and a leakage inductance of 160 μH, the remaining components having the values described above and no shielding being provided, and the measured noise was approximately 10 dB above the background level at the maximum difference. Thus, a system including a filter having a common mode choke in accordance with this invention, reduces the radiated high frequency energy to a level which is no greater than a system with a prior art filter and a shield over the drive and the wiring. By a prior art filter, it is meant a filter including three separate inductors and the other components as described above.

Fig. 4 illustrates an alternative filter circuit 39A constructed in accordance with this invention. The filter circuit 39A is connected in the lines 21A, 21B and 21C and comprises a common mode choke 40A including three coils 41A, 42A and 43A. The filter circuit 39A further includes three resistor-capacitor networks including resistors 52A, 53A and 54A and capacitors 56A, 57A and 58A. The above three networks are the same as the corresponding components shown in solid lines in Fig. 3. Still further, the filter 40A includes three capacitors 44A, 45A and 46A, which are connected and constructed the same as the capacitors 44-46.

The filter 39A further includes a second common mode choke 40B at its end connected to the motor, in addition to the earlier described common mode choke 40A. The second common mode choke also comprises three coils 41A, 42A and 43A and a core similar to the core 51.

Thus, the filter 39A includes substantially identical common mode chokes 40A and 40B at its two ends so that it is substantially symmetrical. The flexibility provided by such a symmetrical filter circuit may be advantageous for several reasons, including ease of installation. Tests involving the filter 39A included, first, establishing a reference level or benchmark by removing the second common mode choke 40B but including the first common mode choke 40A (the result being the filter 39), and connecting it between the inverter 34 of the motor drive and the motor 22. Shielding was not provided in these tests. After measuring the reference level radiation, the second common mode choke 40B was connected adjacent to and in series with the first common mode choke 40A thereby having two chokes at the input to the filter. The radiation level was measured and found to have little difference from the reference level radiation when one choke is provided, thus indicating that merely adding extra inductance at the first common mode choke does not yield a substantial noise reduction benefit. Finally, the second common mode choke 40B was removed from the location adjacent the first choke 40A and installed at the other end of the filter 39A as shown in Fig. 4. A measurement of the radiated high frequency noise showed a drastic improvement in that the high frequency noise was substantially eliminated.

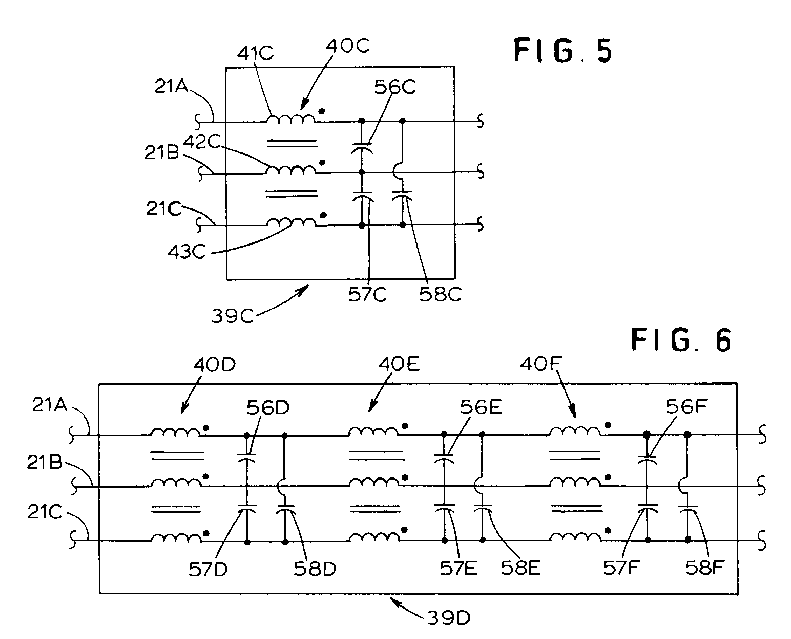

Fig. 5 illustrates yet another alternative filter circuit 39C constructed in accordance with this invention. The filter circuit 39C is connected in the lines 21A, 21B and 21C and comprises a common mode choke 40C including three coils 41C, 42C and 43C wound about a common core similar to the core 51. The filter circuit 39C further includes three capacitors 56C, 57C and 58C connecting the lines 21A, 21B and 21C in a delta network. While the three capacitors 56C, 57C and 58C are similar to the corresponding components shown in Figs. 3 and 4, the filter circuit 39C does not preferably include any resistors corresponding to the resistors 52, 53 and 54 shown in Fig. 3. Such removal of the resistors 52, 53 and 54 is made possible through utilization of core loss in the common mode choke 40C.

The common mode choke 40C can be designed to provide a sufficient amount of core loss to dampen the ringing at the resonant frequency of the filter circuit 39C because the input voltages on the lines 21A, 21B and 21C are known or can be reasonably estimated. As designed, the core of the common mode choke 40C effectively places a respective resistance in parallel with each coil, making the damping effect provided by the resistors 52, 53 and 54, for most applications, insignificant and unnecessary.

Furthermore, the capacitors 44-46 shown in Fig. 3 are no longer necessary because the low pass filter developed by the common mode choke 40C sufficiently reduces the common mode noise as explained above, and also, to a certain extent, the differential mode noise through the leakage inductance associated therewith. Still further, in this particular embodiment of the invention, the capacitors 56C, 57C and 58C preferably each have a capacitance of 10,000 pf, approximately doubling the capacitance of the capacitors 56, 57 and 58, which, in turn, lowers the resonant frequency of the filter circuit 39C.

As is well known to those skilled in the art of inductor design, factors such as the number of turns in the coils, the wire size, the core material, and the total volume of the core will collectively determine the amount of core loss. The preferred embodiment of the filter circuit 39C utilizes the above-identified factors to set the core loss to sufficiently dampen the resonance of the filter circuit 39C.

Fig. 6 illustrates yet another alternative filter circuit 39D constructed in accordance with this invention. The filter circuit 39D is connected in the lines 21A, 21B and 21C and comprises three common mode chokes 40D, 40E and 40F. The common mode chokes 40D, 40E and 40F are wound about respective common cores, each core being similar to the core 51 and designed as described herein with respect to the filter circuit 39C. The filter circuit 39D further includes three delta networks of capacitors similar to the delta network shown in Fig. 5 composed of the capacitors 56C, 57C and 58C. First, the delta network of capacitors disposed adjacent the common mode choke 40D and the inverter 34 includes capacitors 56D, 57D and 58D. Next, the delta network of capacitors disposed between the common mode choke 40E and the common mode choke 40F includes capacitors 56E, 57E and 58E. Finally, the delta network of capacitors disposed adjacent the common mode choke 40F and the motor 22 includes capacitors 56F, 57F and 58F. All of the above-identified capacitors in the three delta networks are preferably similar to the capacitors 56C, 57C and 58C shown in Fig. 5. Thus, the alternative filter circuit 39D shown in Fig. 6 can be seen to include three adjacent stages, each stage being similar to the filter circuit 39C shown in Fig. 5, which provides a significant improvement in the filtering of both the common mode and differential mode high frequency noise.

In fact, other alternative embodiments of the present invention could incorporate 2, 4 or any number of such stages, within commercially practicable limits. For every such additional stage, additional filtering of high frequency noise, as explained above, is accomplished.

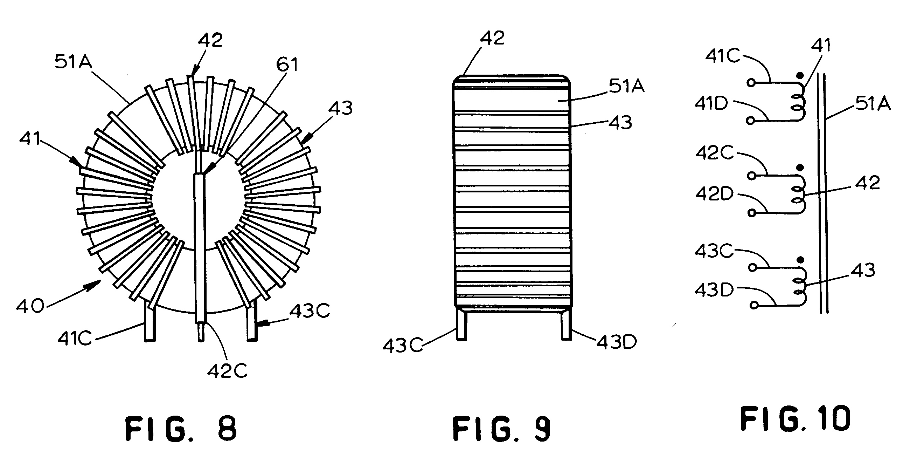

Figs. 8 to 10 illustrate a physical manifestation of the common mode choke 40 (which may be identical with the chokes 40A-40F). The three coils 41, 42 and 43 are wound on a single magnetic core 51A which has a substantially square cross sectional shape. The coil 41 has two lead ends 41C and 41D; the coil 42 has two lead ends 42C and 42D; and the coil 43 has two lead ends 43C and 43D. The lead ends are preferably stripped and tinned, and insulation 61 is provided on the leads where needed.

The core 51A may be a Philips 400XT750-3C81 or a Magnetics Inc. ZF-44925-TC. The outer diameter of the core 51A may be substantially 2.30 inches and the width (seen in Fig. 7) may be substantially 1.13 inches. The three coils 41, 42 and 43 have the same number of turns (12 turns each) and may be made of #16 AWG wire; the coils are equal and as previously mentioned, they have an inductance of 6.5 mH ± 20%. The coils meet a dielectric test of 2500 VAC for each coil to the other coils.

It will be apparent from the foregoing that an improved filter circuit has been provided. A filter as described herein, including a common mode choke at one or both ends, produces a substantial reduction in high frequency noise radiation. The common mode choke(s) produces this result at a reduced cost and size as compared with separate coils in the three lines. By providing a common mode choke instead of three separate inductors, the low frequency motor currents produce opposing currents on one core and cancel each other out. This enables a large reduction in the size and cost of the filter as compared to one including three separate inductors having the same inductance as that of the common mode choke.

Another advantage of the present filter is that the inductors produce a slow increase in current, which gives the short circuit protector 13 time to operate in the event of a short circuit.

## Claims

1. A filter for use in a drive circuit for powering an electrical device, the drive circuit including wiring connecting a drive to the device, said filter comprising at least one common mode choke including a single core and coils for connection in said wiring between the drive and the device, and capacitor means connected to said wiring for reducing high frequency noise on said wiring, said common mode choke forming a low pass filter for reducing said high frequency noise on said wiring.

2. A filter as set forth in Claim 1, wherein two of said common mode chokes are provided, one of said chokes being connected between said capacitor means and the drive and the other of said chokes being connected between said capacitor means and the electrical device.

3. A filter as set forth in Claim 2, wherein said two common mode chokes are substantially identical.

4. A filter as set forth in Claim 1, wherein said capacitor means includes a plurality of capacitors disposed in a delta network in said wiring for reducing differential mode high frequency noise.

5. A filter as set forth in Claim 4, wherein said capacitor means further includes a further plurality of capacitors coupling the wiring in a Y-network to a common node.

6. A filter as set forth in Claim 5, wherein said common node is a ground connection and said further plurality of capacitors shunts any high frequency noise to the ground connection.

7. A filter as set forth in Claim 1, and further including resonance means connected to said wiring for reducing the gain at the resonant frequency of said low pass filter.

8. A filter as set forth in Claim 7, wherein said resonance means comprises at least one resistance connected to said capacitor means in said wiring.

9. A filter as set forth in Claim 8, wherein said resistance and the capacitor means are connected in a Y network between said wiring and a ground connection.

10. A drive system for powering an electric motor from an AC voltage supply, said drive system comprising a converter for rectifying the AC voltage to a DC voltage, an inverter for changing the DC voltage to a variable frequency polyphase voltage, at least first and second wires connecting said inverter with said motor and carrying said polyphase voltage to said motor, said inverter further generating high frequency noise on said wires, and a low pass filter connected to said wires between said inverter and said motor, said filter comprising at least one common mode choke including a single core and a coil connected in each of said wires, and capacitor means connected to said wiring for reducing said high frequency noise on said wiring, said common mode choke forming said low pass filter for reducing said high frequency noise on said wiring.

11. A drive system as set forth in Claim 10, wherein two of said common mode chokes are provided, one of said chokes being connected between said capacitor means and said inverter and the other of said chokes being connected between said capacitor means and said motor.

12. A drive system as set forth in Claim 11, wherein said two common mode chokes are substantially identical.

13. A filter as set forth in Claim 10, wherein said capacitor means includes a plurality of capacitors disposed in a delta network in said wiring for reducing differential mode high frequency noise.

14. A filter as set forth in Claim 13, wherein said capacitor means further includes a further plurality of capacitors coupling the wiring in a Y-network to a ground connection for shunting any high frequency noise to the ground connection.

15. A drive system as set forth in Claim lo, and further including resonance means connected to said wires for reducing the gain at the resonant frequency of said low pass filter.

16. A drive system as set forth in Claim 15, wherein said resonance means comprises at least one resistance connected between said wires in series with said capacitor means.

17. A drive system as set forth in Claim 16, wherein said resistance and the capacitor means are connected in a Y-network to each of said wires and a ground connection.

18. A drive system as set forth in Claim 10, and further including short circuit protection means connected between said AC voltage supply and said converter, said filter causing a slow buildup in current which enables said short circuit protection means to operate in the event of a short circuit.

19. A filter for use in a drive circuit for powering an electrical device, the drive circuit including three-phase wiring connecting a drive to the device, said filter comprising at least one three-phase common mode choke having three coils in the three-phase wiring wound about a single core, said choke forming a low pass filter for reducing high frequency noise on the three-phase wiring.

20. A filter as set forth in Claim 19, and further including capacitor means connected to the three-phase wiring for reducing high frequency noise on the three-phase wiring.

21. A filter as set forth in Claim 20, wherein said capacitor means includes a plurality of capacitors disposed in a delta network of capacitors in the three-phase wiring for reducing high frequency differential mode noise.

22. A filter as set forth in Claim 21, wherein three of said three-phase common mode chokes and three of said delta networks of capacitors are provided, each of said three-phase common mode chokes being disposed adjacent at least one of said delta networks of capacitors along the three-phase wiring.

23. A filter as set forth in Claim 22, wherein said three common mode chokes are substantially identical and said three delta networks of capacitors are substantially identical.

24. A filter as set forth in Claim 23, and further including resonance means disposed in the three-phase wiring for reducing the gain at the resonant frequency of said low pass filter.

25. A filter as set forth in Claim 24, wherein said resonance means comprises said single core.

FIG.1

SHORT CIRCUIT BREAKER BOX

MOTOR DRIVE

FIG.2

CONVERTER AC TO DC

INVERTER DC TO AC

EMI FILTER

MOTOR CONTROL

EP 0 788 216 A2

FIG.3

FIG.4

FIG. 5

FIG. 6

# FIG. 7

FIG. 10

FIG. 9

FIG. 8